# EUROPÄISCHE PATENTANMELDUNG

(11) **EP 3 424 773 A1**
(43) Veröffentlichungstag der Anmeldung: **09.01.2019**
(21) Anmeldenummer: 18181341.1
(22) Anmeldetag: 03.07.2018
(51) Int. Cl.: B60L 11/18, G06Q 20/14, H04L 9/32

(54) **SYSTEM AUFWEISEND EINEN MITTELS SOFTWARE-TICKETS DRAHTLOS STEUERBAREN NETZSCHALTER**

(30) Priorität: 04.07.2017 EP 17179577
(71) Anmelder: Elektron AG, 8804 Au Zürich (CH)
(72) Erfinder: Müller, Johannes, 8854 Siebnen (CH)
(74) Vertreter: Meyer, Michael Josef

(57) **Zusammenfassung**

Die Erfindung betrifft ein System mit einer elektrischen Vorrichtung (10), insbesondere mit einer elektrischen Steckdose, welche in öffentlichen oder halböffentlichen Räumen angeordnet ist. Das System ermöglicht einen Strombezug von einer derartigen Vorrichtung in flexibler, einfacher und effizienter Weise mittels eines Smartphones. Hierzu weist das System einen drahtlos steuerbaren Netzschalter (11) auf, der zum Strombezug keine Kommunikationsverbindung zwischen dem Schalter und einem zentralen Server (30) benötigt. Der zentrale Server (30 stellt Software-Tickets und Berechtigungstoken für einen Strombezug der elektrischen Vorrichtung (10) aus.

Der Schalter (11) ist dazu vorgesehen, eine drahtlose Kommunikationsverbindung mit dem Anwendungsprogramm (21) des Smartphones aufzubauen und einen Berechtigungstoken und ein oder mehrere Software-Tickets von dem Anwendungsprogramm (21) zu empfangen. Der Schalter ist ferner dazu vorgesehen, in einem ersten Schritt den Berechtigungstoken und in einem zweiten Schritt das Software-Ticket zu validieren und nach einer positiven Validierung den Schalter für eine durch die Zeiteinheit des Software-Tickets definierte Zeitperiode zu schliessen, wobei hierzu keine Rückfrage über eine Kommunikationsverbindung zu dem Server (30) nötig ist.

## Beschreibung

### Gebiet der Erfindung

Die Erfindung betrifft ein System aufweisend eine elektrische Vorrichtung, insbesondere eine elektrische Steckdose, und einen Schalter, der in einem offenen Zustand die elektrische Vorrichtung von einem elektrischen Netz trennt und in einem geschlossenen Zustand die elektrische Vorrichtung mit dem elektrischen Netz verbindet und damit einen Strombezug ermöglicht. Weitere Aspekte der Erfindung betreffen ein korrespondierendes Verfahren, eine korrespondierende elektrische Vorrichtung und ein korrespondierendes Anwendungsprogramm.

### Hintergrund

Mit der ständig steigenden Verbreitung von mobilen elektrischen und elektronischen Geräten besteht auch ein erhöhter Bedarf, derartige Geräte im öffentlichen oder halböffentlichen Raum mit Strom zu versorgen, insbesondere um Akkus derartiger Geräte aufzuladen. Sofern der Strom dabei nicht kostenlos zur Verfügung gestellt werden soll, sind Lösungen gefragt, die Stromkosten in einfacher und kostengünstiger Weise zur Verfügung zu stellen und abzurechnen.

Aus der GB 2 455 375 A ist eine elektrische Steckdose bekannt, welche drahtlos mittels eines Nutzergerätes gesteuert werden kann. Die Freigabe des Strombezugs erfolgt dabei über einen zentralen Provider bzw. einen zentralen Server. Daher ist zum Strombezug eine Kommunikationsverbindung zwischen der Steckdose und dem zentralen Provider bzw. dem zentralen Server nötig.

WO 2011/109460 A2 beschreibt ein System, welches es ermöglicht, mittels eines Smartphones eine elektrische Ladestation für Fahrzeuge zu reservieren und zu aktivieren. Die Reservation und eine korrespondierende Bezahlung kann von dem Smartphone oder einem anderen Computer (z.B. Laptop) über einen Webserver initiiert und durchgeführt werden. Der Webserver sendet dann ein entsprechendes Reservationszertifikat mit Zeitangaben (Anfangszeitpunkt, gewünschte Ladedauer, Endzeitpunkt) an das Smartphone. Das Smartphone kann eine drahtlose Kommunikationsverbindung mit der elektrischen Ladestation aufbauen und mittels des Reservationszertifikats die Ladestation für die gewünschte, reservierte Zeit freischalten.

Bei einem derartigen System ist für jede Reservation eine Online-Verbindung zu dem Webserver notwendig. Zudem muss der Reservationszeitraum im Voraus festgelegt werden. Ein spontaner Strombezug ohne Online-Verbindung ist somit nicht möglich.

US 2015/0130630 A1 beschreibt eine Ladestation, um Kraftstoff an ein Fahrzeug einschließlich eines Elektrofahrzeugs abzugeben, ohne einen dedizierten Zugang zu einem Kommunikationsnetzwerk zu benötigen, wobei eine Autorisierung für Flottenfahrzeuge oder Einzelpersonen von einem Zugangsmanagementsystem erhalten werden kann. Die Autorisierung wird drahtlos von einem drahtlosen Gerät an die Station weitergeleitet, um die Abgabe von Kraftstoff zu ermöglichen. Anschließend wird ein Protokoll, das die Transaktion umfasst, dem Zugriffsverwaltungssystem durch dasselbe oder ein anderes drahtloses, mobiles Computergerät bereitgestellt.

WO2011109460 beschreibt ein System, welches einem Smartphone oder irgendeinem Endgerät ermöglicht, ein Ladegerät für Elektrofahrzeuge unter Verwendung einer Website oder eines Server-Computersystems zu reservieren und zu aktivieren. Eine Reservierungsanfrage wird von einem ersten Endgerät unter Verwendung des Servers angenommen. Ein Reservierungszertifikat wird an ein tragbares zweites Endgerät als Reaktion auf die Anfrage unter Verwendung des Servers bereitgestellt. Das Reservierungszertifikat wird von dem tragbaren zweiten Endgerät unter Verwendung einer Zugriffsvorrichtung angenommen. Das Elektrofahrzeugladegerät wird in Reaktion auf das Akzeptieren eines authentischen Reservierungszertifikats unter Verwendung der Zugriffsvorrichtung aktiviert.

Bei diesen Systemen ist jeweils eine vorherige Reservation unter Angabe des Reservationszeitraumes notwendig.

### Darstellung der Erfindung

Es ist eine Aufgabe von Ausführungsformen der vorliegenden Erfindung, ein System der eingangs genannten Art bereitzustellen, welches einen Strombezug in flexibler, einfacher und effizienter Weise ermöglicht.

Eine weitere Aufgabe von Ausführungsformen der vorliegenden Erfindung besteht darin, ein System der eingangs genannten Art bereitzustellen, welches einen Strombezug im kompletten Offline-Betrieb in flexibler, einfacher und effizienter Weise ermöglicht.

Eine weitere Aufgabe von Ausführungsformen der vorliegenden Erfindung besteht darin, ein System der eingangs genannten Art bereitzustellen, welches einen missbräuchlichen Strombezug verhindert oder erschwert.

Ein erster Aspekt der Erfindung betrifft ein System gemäss Anspruch 1.

Demgemäss weist das System eine elektrische Vorrichtung auf, welche insbesondere als eine elektrische Steckdose ausgebildet ist. Ferner weist das System einen drahtlos steuerbaren Schalter auf, welcher in einem offenen Zustand die elektrische Vorrichtung von einem elektrischen Netz trennt und in einem geschlossenen Zustand die elektrische Vorrichtung mit dem elektrischen Netz verbindet. Das System weist ferner ein elektronisches Kommunikationsgerät, insbesondere ein Smartphone, sowie ein auf dem elektronischen Kommunikationsgerät installiertes Anwendungsprogramm auf. Ferner umfasst das System einen zentralen Server, welcher dazu vorgesehen ist, Software-Tickets für einen Strombezug der elektrischen Vorrichtung für das Anwendungsprogramm auszustellen. Die Software-Tickets weisen zumindest eine Server-Signatur, einen Gültigkeitszeitraum und eine Zeiteinheit auf. Ferner weist der Schalter einen Speicher zur Speicherung eines öffentlichen Schlüssels des Servers auf. Der Schalter ist dazu vorgesehen, eine drahtlose Kommunikationsverbindung mit dem Anwendungsprogramm des elektronischen Geräts aufzubauen, ein oder mehrere Software-Tickets von dem Anwendungsprogramm zu empfangen und nach Empfang eines Software-Tickets die Server-Signatur des Software-Tickets und den Gültigkeitszeitraum zu validieren. Nach einer positiven Validierung der Server-Signatur und des Gültigkeitszeitraums wird der Schalter für eine durch die Zeiteinheit des Software-Tickets oder bei Empfang mehrerer Tickets für eine durch die relativen Zeiteinheiten der Software-Tickets definierte Zeitperiode geschlossen und damit die elektrische Vorrichtung zum Strombezug freigeschaltet.

Ein derartiges System ermöglicht es, Steckdosen und andere elektrische Vorrichtungen in einem öffentlichen oder halböffentlichen Raum in kostengünstiger und sehr flexibler Weise für einen Strombezug bereit zu stellen und die Nutzung einfach und effizient abzurechnen.

Der Schalter kann gemäss Ausführungsformen der Erfindung völlig autark arbeiten und benötigt lediglich Strom. Insbesondere ist zum Strombezug keine Kommunikationsverbindung zwischen dem Schalter und dem zentralen Server nötig. Die "Logik" des Schalters und die "Logik" des Anwendungsprogramms und des Servers sind gemäss Ausführungsformen der Erfindung völlig voneinander getrennt. Auch die Kommunikationsverbindungen zwischen dem elektronischen Kommunikationsgerät und dem Schalter einerseits und zwischen dem elektronischen Kommunikationsgerät und dem Server anderseits sind gemäss Ausführungsformen der Erfindung völlig voneinander getrennt. Dadurch ist es möglich, die elektrische Vorrichtung auch an Orten zu betreiben, an denen es keine Möglichkeit gibt, sich mit dem Internet zu verbinden (Kein WLAN, keine Mobilfunknetzabdeckung, keine drahtgebundene Internetverbindung). Dies ist beispielsweise häufig in Tiefgaragen oder Kellerräumen der Fall.

Die Software-Tickets ermöglichen einen Strombezug für die durch die Zeiteinheit des jeweiligen Software-Tickets festgelegte Zeiteinheit. Die Granularität der Zeiteinheiten kann von dem zentralen Server an die jeweilige Anwendung und die Kundenbedürfnisse angepasst werden. Die Zeiteinheiten sind relative Zeiteinheiten und unabhängig von einer absoluten Zeit. Beispielsweise könnten die Zeiteinheiten des Software-Tickets 15 min oder 30 min oder 1 h oder auch einen Tag betragen. Vorzugsweise besitzt der jeweilige Nutzer eine Vielzahl von Software-Tickets mit unterschiedlichen Zeiteinheiten, sodass er sich daraus eine gewünschte Nutzungsdauer flexibel zusammenstellen kann. Software-Tickets gemäss Ausführungsformen der Erfindung mit relativen Zeiteinheiten bieten gegenüber Reservationszertifikaten mit vorbestimmten Reservationszeiten insbesondere den Vorteil einer grösseren Flexibilität. So kann der Nutzer bei Bedarf spontan elektrische Steckdosen in seiner Nähe benutzen und dies ohne die Notwendigkeit einer Online-Verbindung. Die Software-Tickets sind für einen vordefinierten Gültigkeitszeitraum gültig und während dieses Gültigkeitszeitraumes kann der Nutzer die Software-Tickets ohne die Notwendigkeit einer Online-Verbindung nutzen. Die Gültigkeit des Software-Tickets kann eine absolute Zeitangabe sein, d.h. ein Datum und optional eine Uhrzeit, oder auch eine relative Zeitangabe, d.h. eine bestimmte Zeitdauer wie z.B. eine Woche oder ein Monat. Bei einer relativen Zeitangabe kann gemäss Ausführungsformen das Anwendungsprogramm die relative Zeitangabe in eine absolute Zeitangabe umsetzen.

Die Server-Signatur kann insbesondere mittels eines privaten bzw. geheimen Schlüssels eines asymmetrischen Verschlüsselungssystems durchgeführt werden. Der Schalter hat in seinem Speicher den dazu korrespondierenden öffentlichen Schlüssel abgelegt und kann damit die Server-Signatur in sicherer Weise validieren.

Der Gültigkeitszeitraum der Software-Tickets ist ein Sicherheitselement, welches sicherstellt, dass Nutzer des Systems, die Software-Tickets nach Ablauf nicht mehr nutzen können. Der Gültigkeitszeitraum kann beliebig an den jeweiligen Sicherheitslevel der Anwendung angepasst werden und kann gemäss Ausführungsbeispielen z.B. eine Woche oder einen Monat oder 3 Monate betragen. Je kürzer der Gültigkeitszeitraume, je höher der Sicherheitslevel.

Die Software-Tickets weisen zudem eine Nutzerkennung auf. Gemäss einer derartigen Ausgestaltung sind die Software-Tickets personalisierte Tickets, die eindeutig einem Nutzer des Systems zugeordnet sind. Eine derartige Nutzerkennung stellt ein weiteres effizientes und vorteilhaftes Sicherheitselement dar. So erlaubt dies beispielsweise, missbräuchliche Verwendungen von Software-Tickets eindeutig einem Nutzer zuzuordnen und diesen für die weitere Verwendung des Systems zu sperren.

Ausserdem ist der Server dazu vorgesehen, Berechtigungstoken für Nutzer des Systems auszustellen, wobei der Berechtigungstoken wenigstens eine Vorrichtungskennung, eine Nutzerkennung und einen Gültigkeitszeitraum aufweist.

Derartige Berechtigungstoken stellen ein weiteres vorteilhaftes Element für die Sicherheit des Systems dar. Der Berechtigungs-Token stellt eine generelle bzw. grundsätzliche Berechtigung des der Nutzerkennung zugeordneten Nutzers dar, eine elektrische Vorrichtung gemäss der Vorrichtungskennung des Berechtigungstokens zu nutzen. Gemäss Ausgestaltungen der Erfindung kann ein Berechtigungstoken auch mehrere Vorrichtungskennungen aufweisen und entsprechend eine grundsätzliche Berechtigung darstellen, mehrere Vorrichtungen zu nutzen.

Zusätzlich zu einem Berechtigungstoken ist gemäss Ausgestaltungen der Erfindung jedoch immer noch zumindest ein gültiges Software-Ticket für einen Strombezug erforderlich. Somit sind gemäss Ausgestaltungen der Erfindung zum Strombezug immer wenigstens zwei Elemente bzw. Objekte notwendig, namentlich ein Berechtigungstoken und mindestens ein Software-Ticket.

Ein derartiges System, gemäss dem sowohl ein Berechtigungstoken als auch mindestens ein Software-Ticket zum Strombezug erforderlich ist, ist eine technisch sehr effiziente und flexible Lösung. So können die Berechtigungen für die einzelnen Vorrichtungen des Systems mittels der Berechtigungstoken effizient und flexibel geändert, widerrufen und erweitert werden. Gleichzeitig behalten die Software-Tickets bei einer Änderung der Berechtigungstoken ihre Gültigkeit und es wird daher vermieden, dass diese bei einer derartigen Änderung der Berechtigungstoken, die einem Nutzer zur Verfügung stehen, ebenfalls geändert werden müssen. Die Software-Tickets sind somit vorzugsweise unabhängig von einer bestimmten elektrischen Vorrichtung für eine Vielzahl von elektrischen Vorrichtungen gültig und nutzbar.

So können beispielsweise bei einem Mieter, der die Wohnung wechselt und entsprechend z.B. andere Berechtigungstoken für andere Allgemeinräume benötigt, die alten Berechtigungstoken entzogen und neue Berechtigungstoken ausgestellt werden, während die ursprünglich ausgestellten Software-Tickets weiterhin gültig bleiben und auch in der neuen Wohnung benutzt werden können.

Zudem ermöglicht ein derartiges System einen effizienten Entzug von Berechtigungen, z.B. bei einem Missbrauch seitens des Nutzers. Sobald die Berechtigungstoken ungültig werden und der Nutzer keine neuen gültigen Berechtigungstoken bekommt, kann er auch die Software-Tickets nicht mehr nutzen.

Eine Vorrichtungskennung ist dabei eine eindeutige Kennung der elektrischen Vorrichtung bzw. des der elektrischen Vorrichtung zugeordneten Schalters, z.B. eine Seriennummer.

Der Gültigkeitszeitraum der Berechtigungstoken stellt sicher, dass Nutzer, die bis zum Ablauf des Gültigkeitszeitraumes nicht mehr online sind und daher keine aktualisierten Berechtigungstoken mehr erhalten, die elektrischen Vorrichtungen des Systems danach nicht mehr nutzen können.

Der Gültigkeitszeitraum der Berechtigungstoken kann an den jeweiligen Sicherheitslevel der Applikation angepasst werden. Je kürzer der Gültigkeitszeitraume, je höher der Sicherheitslevel.

Der Gültigkeitszeitraum der Berechtigungstoken kann gemäss Ausführungsformen identisch zu dem Gültigkeitszeitraum der Software-Tickets sein. Gemäss anderen Ausführungsformen kann der Gültigkeitszeitraum der Berechtigungstoken aber auch unterschiedlich zu dem Gültigkeitszeitraum der Software-Tickets sein. Zudem können zu verschiedenen Zeiten ausgestellte Software-Tickets unterschiedliche Gültigkeitszeiträume haben. Ausserdem kann der Gültigkeitszeitraum der Software-Tickets z.B. abhängig vom Wert bzw. der relativen Zeiteinheit der Software-Tickets ausgestellt werden oder auch von anderen Faktoren, wie z.B. dem Nutzer, abhängen.

Gemäss Ausführungsformen der Erfindung ist der Gültigkeitszeitraum der Software-Tickets länger bzw. grösser als der Gültigkeitszeitraum der Berechtigungs-Token. Dadurch kann in effizienter Weise sichergestellt werden, dass einerseits die Software-Tickets lange gültig sind und entsprechend der Aufwand, sie zu erneuern, reduziert wird. Andererseits kann etwaigen Sicherheitsanforderungen durch den kürzeren Gültigkeitszeitraum der Berechtigungstoken Rechnung getragen werden. Insbesondere kann dadurch gewährleistet werden, dass sich ein Nutzer jeweils spätestens zum Ablauf des Gültigkeitszeitraumes der Berechtigungstoken mit dem Server verbindet, um die Berechtigungen zu erneuern.

Gemäss einer Ausführungsform der Erfindung kann der Gültigkeitszeitraum der Software-Tickets auch unbegrenzt sein, d.h. der Gültigkeitszeitraum ist unendlich.

Die Berechtigungstoken können gemäss Ausführungsformen der Erfindung dazu benutzt werden, einen zweistufigen Validierungsprozess zu implementieren. Ein derartiger zweistufiger Validierungsprozess weist einen ersten Validierungsschritt und einen zweiten Validierungsschritt auf. In dem ersten Validierungsschritt wird der Berechtigungstoken validiert und in einem zweiten Validierungsschritt werden ein oder mehrere Software-Tickets validiert. Somit sind immer mindestens ein Berechtigungstoken und mindestens ein Software-Ticket zum Strombezug erforderlich.

Dadurch kann in effizienter und flexibler Weise, wie bereits oben dargelegt, die Sicherheit des Systems erhöht werden. Zudem erlaubt ein solcher Berechtigungstoken die Implementierung weiterer vorteilhafter Funktionen.

So kann gemäss Ausführungsformen der Schalter dazu konfiguriert werden, von dem Gültigkeitszeitraum des Berechtigungstokens eine relative Zeitbasis für den Schalter abzuleiten. Dies wiederum erlaubt eine besonders einfache Ausführung des Schalters. So kann der Schalter bei einem derartigen System ohne eine eigene absolute Zeitbasis ausgestaltet sein. Dies ist einerseits kostengünstig und erlaubt andererseits den Betrieb der elektrischen Vorrichtungen an Orten, an denen keine Funkabdeckung besteht, z.B. in Tiefgaragen. Ausserdem bietet eine derartige relative Zeitbasis Sicherheitsvorteile gegenüber einer absoluten Zeitbasis.

Gemäss Ausgestaltungen aktualisiert der Schalter seine Zeitbasis immer entsprechend dem neuesten Gültigkeitszeitraum, den er von einem Berechtigungstoken erhalten hat. Hat der Schalter beispielsweise als gegenwärtige Zeitbasis den Gültigkeitszeitraum Mai 2017 und erhält er dann einen Berechtigungstoken mit dem Gültigkeitszeitraum Juni 2017, so stellt er seine interne relative Zeitbasis auf Juni 2017 um. Zudem könnte er dann einen internen Timer von beispielsweise 1 bis 10 Tagen setzen, während dem er noch Berechtigungstoken und Software-Tickets mit Gültigkeitszeitraum Mai 2017 akzeptiert. Danach könnten dann nur noch Berechtigungstoken und Software-Tickets mit einem Gültigkeitszeitraum Juni 2017 akzeptiert werden. In dieser Weise aktualisiert der Schalter seine Zeitbasis immer mittels der empfangenen Berechtigungstoken.

Gemäss einer weiteren Ausführungsform ist das Anwendungsprogramm derart konfiguriert, dass es dem Nutzer diejenigen elektrischen Vorrichtungen innerhalb einer vordefinierten Entfernung anzeigt, für die der Nutzer passende Berechtigungstoken hat. Zudem kann das Anwendungsprogramm Belegungsinformationen dieser elektrischen Vorrichtungen anzeigen. Belegungsinformationen können beispielsweise angeben, welche Vorrichtungen frei sind, welche belegt sind und bis wann sie belegt sind.

Gemäss einer weiteren Ausführungsform kann das System derart konfiguriert sein, dass das Anwendungsprogramm beim Start des Anwendungsprogramms und/oder bei jeder Kommunikation des Anwendungsprogramms mit dem Server eine aktualisierte Liste mit Berechtigungstoken empfängt.

Dies erhöht in effizienter Weise die Sicherheit des Systems und erlaubt es, die jeweiligen Berechtigungen der Nutzer flexibel und zeitnah auf dem neuesten Stand zu halten.

Gemäss einer weiteren vorteilhaften Ausgestaltung der Erfindung ist das elektronische Kommunikationsgerät ein Mobiltelefon, insbesondere ein Smartphone. Zudem ist die Nutzerkennung mit der Mobilfunktelefonnummer des Mobiltelefons verknüpft ist.

Eine derartige Mobilfunktelefonnummer ist immer mit einer internationalen Mobilfunkteilnehmerkennung (International Mobile Subscriber Identity (IMSI)) verknüpft. Zudem bestehen in einer Vielzahl von Ländern, beispielsweise Deutschland und der Schweiz, gesetzliche Vorgaben, gemäss denen man sich bei Erwerb einer neuen SIM-Karte und somit einer neuen IMSI ausweisen muss und somit bei Erwerb einer SIM-Karte seine Identität nachweisen muss. Daher ermöglichen Ausführungsformen der Erfindung eine eindeutige Identifizierung der Nutzer des Systems anhand der IMSI bzw. der zugehörigen Mobilfunktelefonnummer.

Da die Nutzerkennung in jedes Software-Ticket integriert ist und mit der Server-Signatur verknüpft ist, ist gemäss dieser Ausführungsform auch jedes einzelne Software-Ticket eindeutig mit der Identität des Nutzers verknüpft. Dies erleichtert eine rechtsgültige Abrechnung.

Gemäss einer weiteren vorteilhaften Ausgestaltung der Erfindung ist das System dazu eingerichtet ist, ein Registrierungsverfahren zur Registration eines neuen Nutzers durchzuführen. Dabei umfasst das Registrierungsverfahren folgende Schritte:
Senden einer Registrierungsanfrage von dem Anwendungsprogramm des Mobiltelefons über einen ersten Kommunikationskanal an den zentralen Server, wobei die Registrierungsanfrage eine Mobilfunktelefonnummer enthält;
Erzeugen eines Codes zur Nutzerauthentifizierung durch den Server;
Senden des Codes von dem Server über einen zweiten Kommunikationskanal, der separat zu dem ersten Kommunikationskanal ausgebildet ist, an das Anwendungsprogramm des Mobiltelefons;
Anzeige des Codes durch das Anwendungsprogramm auf einem Display des Mobiltelefons;
Empfangen des Codes von dem Anwendungsprogramm durch Eingabe des Nutzers mittels einer Eingabevorrichtung des Mobiltelefons;
Senden des Codes zur Authentifizierung des Nutzers von dem Mobiltelefon über den ersten Kommunikationskanal an den Server; und
Registrierung des Nutzers mit einer Nutzerkennung, die mit der Mobiltelefonnummer verknüpft ist.

Der erste Kommunikationskanal ist vorzugsweise eine Internetverbindung, insbesondere eine durch SSL/TLS gesicherte Verbindung. Der zweite Kommunikationskanal ist vorzugsweise eine Mobilfunkverbindung, insbesondere ein Short Message Service (SMS).

Durch die Verwendung zweier separater Kommunikationskanäle wird die Sicherheit des Registrierungsverfahrens erhöht. Insbesondere wird dadurch gewährleistet, dass der Code nur von dem Mobiltelefon empfangen werden kann, dessen Nummer zur Registrierung verwendet wird.

Gemäss einer weiteren vorteilhaften Ausgestaltung der Erfindung sind die relativen Zeiteinheiten der Software-Tickets miteinander zu einer Gesamtbezugsdauer des Strombezugs kombinierbar sind.

Wie oben beschrieben sind die Zeiteinheiten relative Zeiteinheiten und können z.B. 15 min oder 30 min oder 1 h oder auch einen Tag betragen. Vorzugsweise besitzt der jeweilige Nutzer eine Vielzahl von Software-Tickets mit unterschiedlichen Zeiteinheiten, sodass er die Software-Tickets miteinander kombinieren und sich daraus eine gewünschte Gesamtbezugsdauer bzw. Gesamtnutzungsdauer flexibel zusammenstellen kann. Möchte der Nutzer beispielsweise eine Steckdose für 3 Stunden und 15 Minuten benutzen, kann er 3 Software-Tickets mit einer Zeiteinheit von 1h und ein Software-Ticket mit einer Zeiteinheit von 15 min kombinieren.

Daher ermöglichen Ausführungsformen der Erfindung eine sehr flexible Nutzung der elektrischen Vorrichtungen.

Gemäss einer weiteren vorteilhaften Ausgestaltung der Erfindung ist der Schalter dazu eingerichtet, mehrere Software-Tickets von dem Anwendungsprogramm zu empfangen, die relativen Zeiteinheiten der empfangenen Software-Tickets zu einer Gesamtbezugsdauer des Strombezugs zu addieren und den Schalter nach positiver Validierung der Server-Signatur und des Gültigkeitszeitraums für eine durch die Gesamtbezugsdauer der Software-Tickets definierte Zeitperiode zu schliessen und die elektrische Vorrichtung zum Strombezug freizuschalten.

Dem Nutzer steht somit gemäss Ausführungsformen der Erfindung eine elektronische Brieftasche bzw. ein elektronisches Portemonnaie mit einer Vielzahl von Software-Tickets zur Verfügung, die er flexibel und unabhängig zusammenstellen und auch ohne jede Netzabdeckung und Serververbindung (offline) nutzen kann.

Gemäss einer weiteren Ausführungsform weisen die Software-Tickets jeweils eine individuelle Ticket-Kennung auf.

Eine derartige individuelle Ticket-Kennung ist eine eindeutige Kennzeichnung für jedes Software- Ticket, welches eine eindeutige Nachverfolgung ermöglicht. Dies erlaubt die Integration von vorteilhaften Sicherheitsfunktionen in das System.

So ist gemäss einer vorteilhaften Ausgestaltung der Schalter dazu konfiguriert, eine Sperrliste mit Ticket-Kennungen von bereits benutzten Software-Tickets zu speichern und vor Freischaltung der elektrischen Vorrichtung die jeweilige Ticket-Kennung mit der Sperrliste zu vergleichen. Bei einem negativen Vergleichsergebnis, d.h. wenn die Ticket-Kennung nicht auf der Sperrliste ist, wird die elektrische Vorrichtung freigeschaltet. Ein positives Vergleichsergebnis, d.h. wenn die Ticket-Kennung auf der Sperrliste ist, zeigt eine vorherige Benutzung des Software-Tickets und somit einen Missbrauch an. Daher wird in einem solchen Fall eine Freischaltung verweigert und eine nochmalige Benutzung des Software-Tickets verhindert.

Dies erhöht in effizienter Weise die Sicherheit des Systems. Insbesondere funktioniert dies System unabhängig von einer Server-Kommunikation. Dadurch wird eine missbräuchliche Nutzung auch dann verhindert, wenn der Nutzer sich nicht mehr mit dem Server verbindet, um Updates zu verhindern.

Gemäss einer vorteilhaften Ausgestaltung sind zwei oder mehr elektrische Vorrichtungen, die sich in Funkreichweite zueinander befinden, dazu konfiguriert, die jeweils gespeicherten Sperrlisten miteinander auszutauschen.

Dies erhöht in effizienter Weise die Sicherheit des Systems. Der Austausch der Sperrlisten gemäss dieser Ausführungsform erfolgt somit dezentral und unabhängig von einer Server-Kommunikation. Dadurch wird eine missbräuchliche Nutzung auch ohne Server-Updates verhindert und ein dezentrales "Update-Cluster" mit einem erhöhten Sicherheitslevel gebildet.

Gemäss einer vorteilhaften Ausgestaltung ist der Schalter dazu konfiguriert, die jeweils gespeicherte Sperrliste an das mit ihm in kommunikativer Verbindung stehende Anwendungsprogramm zu senden. Weiter ist das Anwendungsprogramm dazu konfiguriert, die von dem Schalter empfangene Sperrliste an den Server weiterzuleiten.

Gemäss dieser Ausgestaltung wird der Server in effizienter Weise zeitnah über bereits benutzte Tickets informiert. Dies ermöglicht dem Server, bereits eingelöste Software-Tickets zu kennzeichnen. Dies kann z.B. zur Erkennung von Anomalien eingesetzt werden. Gemäss einer weiteren vorteilhaften Ausführungsform könnte der Server die Sperrlisten an die elektrischen Vorrichtungen weiterleiten, um den Sicherheitslevel weiter zu erhöhen.

Die Sperrlisten werden vorzugsweise mit dem öffentlichen Schlüssel des Servers verschlüsselt.

Gemäss einer anderen Ausgestaltung ist das Anwendungsprogramm derart konfiguriert, dass es nach einem Senden eines Software-Tickets an den elektrischen Schalter das Software-Ticket automatisch löscht.

Dies verhindert in effizienter, einfacher und eleganter Weise eine weitere Verwendung des Software-Tickets. Vorzugsweise sind weitere Sicherheitsmechanismen in das Anwendungsprogramm integriert, welche ein Umgehen der automatischen Löschfunktion verhindern.

Gemäss Ausführungsformen ist das Anwendungsprogramm so konfiguriert, dass ein Reverse Engineering des Anwendungsprogrammes erschwert wird, insbesondere durch Obfuskierungstechniken, den Einsatz von Debugger Erkennungstechniken, durch Hinzufügen von Code als kompilierte C/C++ Bibliothek und/oder das Ablegen von Dateien als dynamische Bibliotheken, z.B. als .so Dateien.

Gemäss einer weiteren vorteilhaften Ausgestaltung ist der Server zur Durchführung eines Erneuerungsmechanismus zur Erneuerung abgelaufener Software-Tickets konfiguriert.

Da die Software-Tickets als Sicherheitsmechanismus einen Gültigkeitszeitraum aufweisen, kann mit einem derartigen Mechanismus ein ersatzloser Verfall verhindert werden. Hierzu empfängt der Server ein abgelaufenes Software-Ticket von dem Anwendungsprogramm und stellt ein neues Software-Ticket für das abgelaufene Software-Ticket mit einem neuen Gültigkeitszeitraum aus. Hierzu überprüft der Server vorher, ob das Software-Ticket auch wirklich noch nicht benutzt wurde. Weitere vorteilhafte Überprüfungen umfassen eine Überprüfung der Signatur, eine Überprüfung, ob der Nutzer überhaupt die Berechtigung für die gesendeten Software-Tickets besitzt und ob das Ticket auch wirklich abgelaufen ist.

Das neue Software-Ticket bekommt vorzugsweise dieselbe Ticket-Kennung wie das abgelaufene Software-Ticket. Dies erschwert oder verhindert in effizienter Weise, dass abgelaufene Tickets, die bereits benutzt worden sind, nochmal benutzt werden. Insbesondere können elektrische Vorrichtungen, bei denen das Ticket bereits benutzt wurde, anhand ihrer Sperrlisten eine Benutzung erkennen und eine Einlösung verweigern.

Gemäss einer weiteren vorteilhaften Ausgestaltung der Erfindung ist das Anwendungsprogramm derart konfiguriert, dass es einen Online-Modus aufweist, in dem das Anwendungsprogramm über eine Weitverkehrsverbindung, insbesondere über eine Internetverbindung, mit dem zentralen Server gekoppelt ist.

Im Onlinemodus können Sperrlisten und Nutzungsdaten mit dem zentralen Server ausgetauscht werden, Berechtigungstoken aktualisiert werden sowie Software-Tickets bezogen und erneuert werden.

Gemäss einer weiteren vorteilhaften Ausgestaltung der Erfindung weist das Anwendungsprogramm einen Offline-Modus auf, in dem das Anwendungsprogramm keine Weitverkehrsverbindung oder sonstige Kommunikationsverbindung mit dem zentralen Server hat. Wie oben beschrieben ist in einem derartigen Offline-Modus trotzdem eine Benutzung der Software-Tickets und der Berechtigungstoken möglich, sofern diese noch nicht abgelaufen sind.

Vorzugsweise ist das Anwendungsprogramm derart konfiguriert, dass es Nutzungsdaten und insbesondere Sperrlisten, die es von einer elektrischen Vorrichtung im Offline-Modus erhalten hat, zwischenspeichert. Sobald es dann wieder eine Weitverkehrsverbindung mit dem zentralen Server hat, können die zwischengespeicherten Nutzungsdaten, insbesondere die zwischengespeicherten Sperrlisten, an den zentralen Server übermittelt werden.

Gemäss einer weiteren vorteilhaften Ausgestaltung der Erfindung ist die drahtlose Kommunikationsverbindung zwischen dem Anwendungsprogramm und dem Schalter eine Verbindung gemäss dem Bluetooth-Standard, insbesondere gemäss dem Bluetooth Low Energy (BLE) Standard, eine Verbindung gemäss dem Near Field Communication (NFC)-Standard oder eine WLAN-Verbindung, insbesondere ein Verbindung gemäss dem IEEE 802.11-Standard oder dem WIFI-Standard.

Gemäss weiteren vorteilhaften Ausgestaltungen der Erfindung können andere Funkkommunikationsprotokolle verwendet werden, welche insbesondere für kurze Reichweiten und geringen Energieverbrauch optimiert sind. Unter kurzen Reichweiten werden gemäss bevorzugten Ausführungsformen Reichweiten von weniger als 10m verstanden.

Gemäss einer weiteren bevorzugten Ausführungsform ist die drahtlose Kommunikationsverbindung eine direkte Kommunikationsverbindung zwischen dem Schalter und dem elektronischen Kommunikationsgerät. Eine derartige direkte Kommunikationsverbindung benötigt keinerlei externe Kommunikationseinrichtungen wie WLAN-Router, sondern die Kommunikationsverbindung kann ausschliesslich mittels der in dem Schalter und dem elektronischen Kommunikationsgerät vorhandenen Sende- und Empfangsmitteln realisiert werden. Dadurch kann der Strombezug unabhängig von jeglicher externer Kommunikationsinfrastruktur realisiert werden.

Wie oben angeführt ist die elektrische Vorrichtung gemäss Ausgestaltungen der Erfindung eine Steckdose.

Eine derartige Steckdose kann beispielsweise in öffentlichen oder halböffentlichen Räumen angeordnet sein und dort einen Strombezug über das elektronische Kommunikationsgerät ermöglichen. Für den Betrieb der Steckdose ist weder WLAN noch Ethernet noch zusätzliche externe Datenverkabelung nötig. Daher benötigt die Installation einer solchen Steckdose keinerlei Spezialkenntnisse und kann genau wie eine herkömmliche Steckdose installiert werden.

Gemäss einer weiteren vorteilhaften Ausgestaltung der Erfindung ist die elektrische Vorrichtung ein elektrischer Verbraucher bzw. eine elektrische Last, insbesondere eine Waschmaschine oder eine Sauna.

Mit einer derartigen Ausgestaltung können elektrische Geräte, die in öffentlichen oder halböffentlichen Räumen aufgestellt sind, in einfacher und zuverlässiger Weise mittels des elektronischen Kommunikationsgerätes benutzt werden.

Gemäss einer weiteren vorteilhaften Ausgestaltung der Erfindung ist der zentrale Server ein Cloud-Server.

Ein derartiger Cloud-Server kann die Schlüsselverwaltung und Nutzungsdaten als zentrale Stelle administrieren. Insbesondere kann ein derartiger Cloud-Server als Vermittler zwischen den Nutzern der elektrischen Vorrichtungen und den Besitzern bzw. Eigentümern der elektrischen Vorrichtungen fungieren. Somit bildet der Cloud-Server einerseits eine Schnittstelle zu den Nutzern der elektrischen Vorrichtungen, indem er ihnen die gewünschten Berechtigungstoken und Software-Tickets aushändigt. Andererseits bildet der Cloud-Server eine Schnittstelle zu den Besitzern bzw. Eigentümern der elektrischen Vorrichtungen, indem er ihnen die ausgestellten Berechtigungen und Tickets zur Verfügung stellt und damit eine Abrechnung ermöglicht.

Ein weiterer Aspekt der Erfindung betrifft ein Verfahren zum Bedienen eines Schalters mittels eines Anwendungsprogramms eines elektronischen Kommunikationsgerätes, wobei der Schalter zum Freischalten einer elektrischen Vorrichtung an ein elektrisches Netz vorgesehen ist. Das Verfahren umfasst die Schritte Senden einer Anforderung zum Ausstellen von Software-Tickets von einem Anwendungsprogramm eines elektronischen Kommunikationsgerätes an einen zentralen Server und Ausstellen von Software-Tickets für die Freischaltung der elektrischen Vorrichtung zum Strombezug durch den zentralen Server. Die Software-Tickets weisen zumindest eine Server-Signatur, einen Gültigkeitszeitraum und eine Zeiteinheit auf. Weitere Schritte umfassen Aufbauen einer drahtlosen Kommunikationsverbindung zwischen dem Anwendungsprogramm und dem Schalter, Senden von ein oder mehreren Software-Tickets an den Schalter, Empfangen der ein oder mehreren Software-Tickets durch den Schalter, Überprüfen der Server-Signatur des Software-Tickets und des Gültigkeitszeitraums und ein Schliessen des Schalters zum Strombezug nach positiver Überprüfung der Server-Signatur und des Gültigkeitszeitraums für eine durch die Zeiteinheit des Software-Tickets definierte Zeitperiode.

Weitere Aspekte der Erfindung betreffen eine elektrische Vorrichtung, einen Schalter sowie ein Anwendungsprogramm eines derartigen Systems.

Weitere Ausgestaltungen, Vorteile und Anwendungen der Erfindung ergeben sich aus den weiteren abhängigen Ansprüchen und aus der nun folgenden Beschreibung anhand der Figuren.

### Dabei zeigen:

### Kurze Beschreibung der Zeichnungen

FIG. 1 zeigt ein System mit einer elektrischen Vorrichtung gemäss einem Ausführungsbeispiel der Erfindung;
FIG. 2 zeigt ein schematisch dargestelltes Beispiel für einen Berechtigungstoken;
FIG. 3 zeigt ein schematisch dargestelltes Beispiel für ein Software-Ticket;
FIG 4 zeigt ein Flussablaufdiagramm eines Registrierungsverfahrens und eines Initialisierungsverfahrens gemäss Ausführungsformen der Erfindung;
FIG. 5 zeigt ein Flussablaufdiagramm eines Ticketbezugs bzw. Ticketkaufs sowie das Einlösen eines solchen Tickets zum Strombezug;
FIG 6 zeigt ein Flussablaufdiagramm eines Erneuerungsmechanismus, mittels dem abgelaufene Software-Tickets erneuert werden können; und
FIG. 7 zeigt ein Flussablaufdiagramm eines Registrierungsverfahrens gemäss Ausführungsformen der Erfindung.

### Weg(e) zur Ausführung der Erfindung

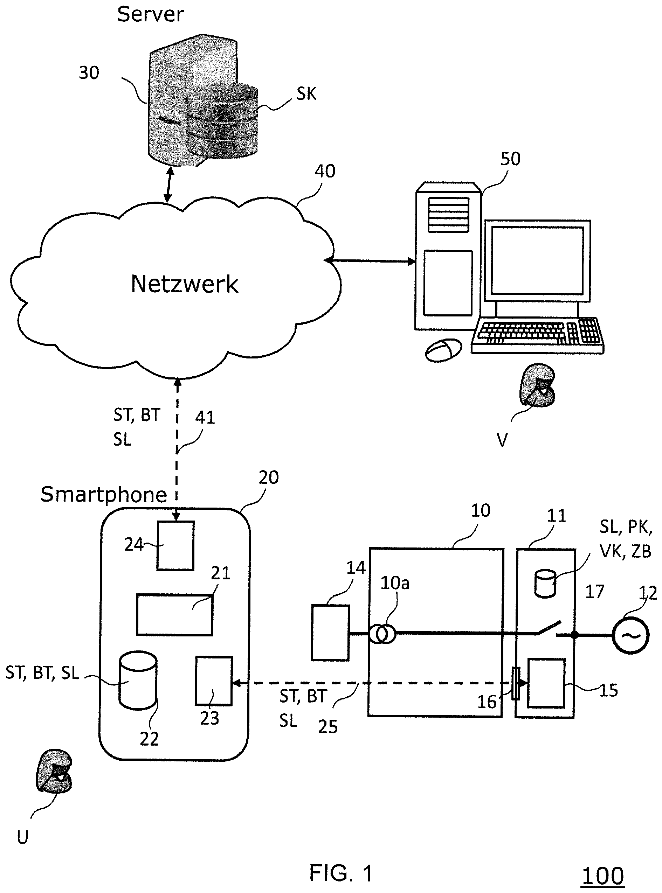

FIG. 1 zeigt ein System 100 mit einer elektrischen Vorrichtung 10 und einem Schalter 11. Der Schalter 11 ist als elektronisch steuerbarer Schalter ausgebildet und wird nachfolgend auch als elektronischer Schalter bezeichnet. Der elektronische Schalter 11 ist derart ausgebildet, dass er in einem offenen Zustand die elektrische Vorrichtung 10 von einem elektrischen Netz 12 trennt und in einem geschlossenen Zustand die elektrische Vorrichtung 10 mit dem elektrischen Netz 12 verbindet. Bei geschlossenem Schalter 12 kann somit Strom von dem elektrischen Netz 12 bezogen werden. Gemäss dem in FIG. 1 gezeigten Ausführungsbeispiel ist die elektrische Vorrichtung 10 eine elektrische Steckdose. Entsprechend verbindet der elektronische Schalter 11 in geschlossenem Zustand das elektrische Netz 12 mit Anschlusslöchern 10a zum Anschluss eines externen elektrischen Gerätes 14. Gemäss anderen bevorzugten Ausgestaltungen der Erfindung kann die elektrische Vorrichtung 10 selbst ein elektrischer Verbraucher bzw. eine elektrische Last sein, wie z.B. eine Sauna oder eine Waschmaschine. Gemäss bevorzugten Ausgestaltungen der Erfindung ist der Schalter 11 in die Vorrichtung 10 integriert. Der elektronische Schalter 11 weist ein Steuermodul 15 auf, welches zur Steuerung des elektronischen Schalters 11 vorgesehen ist. Ausserdem weist der elektronische Schalter 11 ein Interface 16 auf, mittels dem eine drahtlose Kommunikationsverbindung zu externen Geräten aufgebaut werden kann.

Der elektronische Schalter 11 weist einen Speicher 17 auf, in dem diverse Informationen zur Steuerung und zum Betrieb des elektronischen Schalters 11 abgelegt werden können. Insbesondere kann der Speicher 11 zur Speicherung eines öffentlichen Schlüssels (Public Key) PK eines Servers 30, zur Speicherung einer eindeutigen Vorrichtungskennung VK, z.B. einer Seriennummer, des Schalters 11 und zur Speicherung von Sperrlisten SL konfiguriert sein, wie nachstehend noch näher erläutert wird. Ausserdem dient der Speicher 17 vorzugsweise zur Speicherung einer Zeitbasis ZB des Schalters 11 bzw. der Vorrichtung 10.

Das System 100 weist ferner ein elektronisches Kommunikationsgerät 20 auf, welches insbesondere ein Smartphone sein kann.

Das elektronische Kommunikationsgerät 20 ist zur Steuerung des elektronischen Schalters 11 konfiguriert. Auf dem Kommunikationsgerät 20 ist ein Anwendungsprogramm 21 installiert, welches dazu konfiguriert ist, eine direkte drahtlose Kommunikationsverbindung 25 mit dem elektronischen Schalter 11 aufzubauen. Dies kann insbesondere eine Verbindung gemäss dem Bluetooth Standard sein, aber auch eine WLAN- oder WIFI-Verbindung oder eine NFC-Verbindung. Die Verbindung 25 ist vorzugsweise eine direkte Funkverbindung zwischen dem Schalter 11 und dem Kommunikationsgerät 20 ohne Nutzung irgendwelcher externen Kommunikationsinfrastruktur wie WLAN-Routern, Basisstationen, Repeatern oder Ähnlichem. In dem Steuermodul 15 des elektronischen Schalters 11 ist ein Steuerprogramm abgelegt, welches mit dem Anwendungsprogramm 21 kommunizieren kann.

Das Steuerprogramm kann vorteilhaft als Firmware in dem elektronischen Schalter 11 gespeichert sein. Die Firmware kann über das Interface 16 eine drahtlose Kommunikationsverbindung 25 mit einem nicht näher dargestellten Updateprogramm des elektronischen Kommunikationsgerätes 20 aufbauen und darüber Firmware-Updates beziehen.

Das Update-Programm kann z.B. von dem Eigentümer oder Verwalter der elektrischen Vorrichtungen 10 genutzt werden.

Das Anwendungsprogramm 21 ist dazu konfiguriert, über ein Interface 24 eine Weitverkehrsverbindung 41 zu einem Weitverkehrsnetz 40 aufzubauen und darüber eine Kommunikationsverbindung zu dem zentralen Server 30 aufzubauen, der ebenfalls mit dem Weitverkehrsnetz 40 verbunden ist. Das Weitverkehrsnetz 40 ist vorzugsweise das Internet und die Weitverkehrsverbindung 41 somit eine Internetverbindung. Die Verbindung zu dem Weitverkehrsnetz 40 kann z.B. über ein Mobilfunknetz oder ein anderes drahtloses Netzwerk wie z.B. ein WLAN Netz erfolgen.

Das Kommunikationsgerät 20 weist einen Speicher 22 auf, in dem z.B. die Berechtigungstoken BT, die Software-Tickets ST sowie Sperrlisten SL abgespeichert werden.

Der zentrale Server 30 ist vorzugsweise als Cloud-Server ausgebildet und ist dazu konfiguriert, Software-Tickets ST und Berechtigungstoken BT für einen Strombezug der elektrischen Vorrichtung 10 für das Anwendungsprogramm 21 auszustellen. Ausserdem können über die Weitverkehrsverbindung 41 z.B. Sperrlisten SL Ausgetauscht werden.

Der Server 30 besitzt einen privaten Schlüssel (Secret Key) SK eines asymmetrischen Verschlüsselungssystems und einen dazu korrespondierenden öffentlichen Schlüssel (Public Key) PK. Der öffentliche Schlüssel ist wie oben beschrieben auch in dem Speicher 17 des Schalters 11 abgelegt.

Ein Nutzer U des Kommunikationsgerätes 20 kann sich das Anwendungsprogramm 21 beispielsweise von dem zentralen Server 30 oder einer anderen Distributionsstelle herunterladen und sich bei dem zentralen Server 30 als Nutzer registrieren.

Vorzugsweise sind im Auslieferungszustand der Vorrichtungen 10 die eindeutige Vorrichtungskennung VK als Seriennummer der Vorrichtung sowie der Public Key PK des Servers 30 bereits in dem Speicher 17 abgelegt. Dies hat den Vorteil, dass beim Einbau der Vorrichtungen 10, z.B. der Steckdosen, vor Ort keine Konfiguration vorgenommen werden muss. Gemäss weiteren Ausführungsformen der Erfindung kann der Speicher 17 auch einen Master-Key beinhalten. Ein derartiger Master Key stellt eine zusätzliche Sicherheitsschicht da, der als Basis für eine Certificate Authority (CA) verwendet werden kann. Die CA kann zur Ableitung eines Zertifikats für den Server verwendet werden.

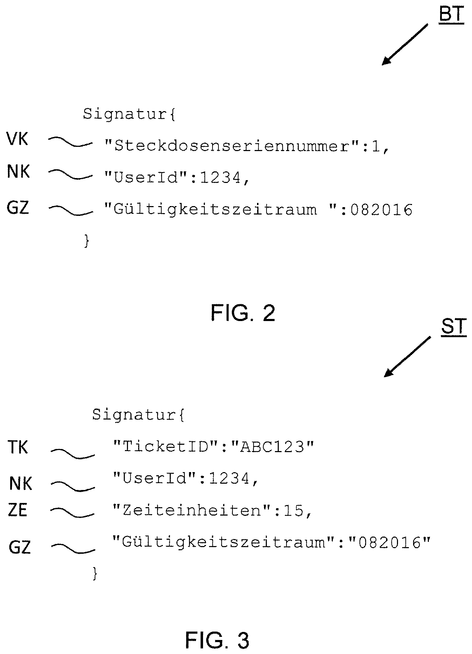

FIG. 2 zeigt ein schematisch dargestelltes Beispiel für einen Berechtigungstoken BT.

Der Berechtigungstoken BT weist als Vorrichtungskennung VK eine "Steckdosenseriennummer" auf, hier mit 1 bezeichnet. Der Berechtigungstoken BT weist ferner als Nutzerkennung NK eine User Id auf, hier mit 1234 bezeichnet, sowie einen Gültigkeitszeitraum GZ auf, hier mit 082016, d.h. August 2016 bezeichnet, auf.

Der Berechtigungstoken BT ist mit dem privaten Schlüssel SK des Servers 30 verschlüsselt bzw. signiert und kann dadurch später mit dem in dem Speicher 17 des Schalters 11 gespeicherten öffentlichen Schlüssels PK authentifiziert werden.

FIG. 3 zeigt ein schematisch dargestelltes Beispiel für ein Software-Ticket ST.

Das Software-Ticket ST weist als Ticket-Kennung TK eine "Ticket ID" "ABC123" auf und als Nutzerkennung NK eine User Id auf, hier mit "1234" bezeichnet. Die Nutzerkennung NK entspricht für jeweils dieselben Nutzer der Nutzerkennung NK der Berechtigungstoken. Das Software Ticket ST weist zudem eine Zeiteinheit ZE auf, hier mit "15" bezeichnet, welche z.B. 15 Minuten entsprechen könnte. Schliesslich weist das Software-Ticket ST noch einen Gültigkeitszeitraum GZ auf, hier mit "082016", d.h. August 2016, bezeichnet, auf.

Das Software Ticket ST ist mit dem privaten Schlüssel SK des Servers 30 verschlüsselt bzw. signiert und kann dadurch später mit dem in dem Speicher 17 des Schalters 11 gespeicherten öffentlichen Schlüssel PK authentifiziert werden.

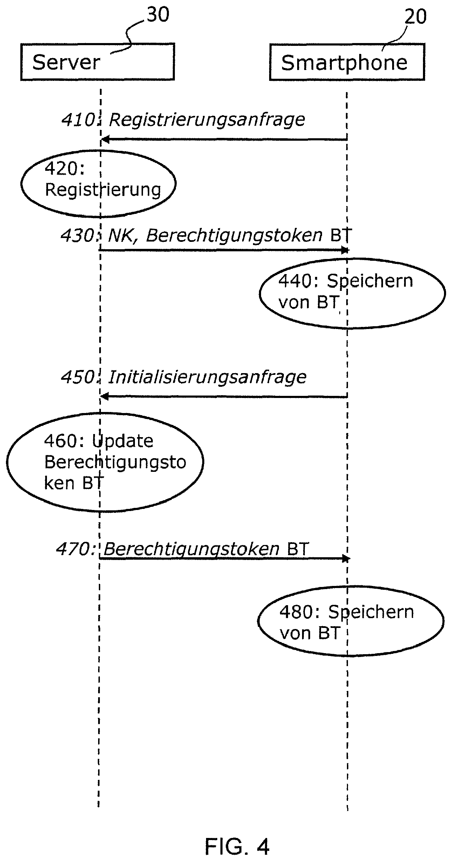

FIG. 4 zeigt ein Flussablaufdiagramm eines Registrierungsverfahrens und eines Initialisierungsverfahrens gemäss Ausführungsformen der Erfindung.

Das Registrierungsverfahren und das Initialisierungsverfahren illustrieren die Schritte zwischen dem Server 30 und dem Kommunikationsgerät 20 gemäss FIG. 1.

Nachfolgend wird davon ausgegangen, dass das Kommunikationsgerät 20 als Smartphone 20 ausgebildet ist und die elektrische Vorrichtung 10 als Steckdose 10. Ausserdem wird davon ausgegangen, dass Steckdose 10 und Schalter 11 integriert ausgebildet sind und eine einheitliche Vorrichtungskennung VK aufweisen.

In einem Schritt 410 sendet das Smartphone 20 eine Registrierungsanfrage an den Server 30. Die Registrierungsanfrage kann beispielsweise ein Antrag sein, sich für die Benutzung von einer Gruppe von elektrischen Steckdosen 10 zu registrieren. Der Server 30 erfasst dann die Nutzerdaten, überprüft die generelle Berechtigung des Nutzers und erfasst beispielsweise auch Rechnungsadressen oder andere Zahlungsinformationen für eine Abrechnung bzw. Bezahlung der Nutzung. Der Server 30 ist vorzugsweise ein Cloud-Server und entsprechend kann sich z.B. der Verwalter des Mehrfamilienhauses von seinem Arbeitsrechner 50 auf den Server 30 einloggen und dem Bewohner die Berechtigung erteilen. Bei positiver Berechtigungsprüfung registriert der Server 30 den Nutzer U in einem Schritt 420. Die Registrierung umfasst auch die Konfiguration der (initialen) Berechtigungen und resultiert in einer Zuordnung des Nutzers zu erlaubten Steckdosen. In einem Schritt 430 sendet der Server 30 dem Anwendungsprogramm 21 dann ein oder mehrere Berechtigungstoken BT zu, vorzugsweise in Form einer Liste, und vorzugsweise je einen Berechtigungstoken für jede erlaubte Steckdose 10. In einem Schritt 440 empfängt und speichert das Smartphone 20 die Berechtigungstoken BT, vorzugsweise in Form einer Liste.

Diese Berechtigungstoken BT bzw. die Liste mit den Berechtigungstoken BT wird bei jedem Start des Anwendungsprogramms 21 und bei jeder Kommunikation mit dem Server 30 aktualisiert. Dadurch wird sichergestellt, dass die korrespondierenden Berechtigungen der Nutzer regelmässig aktualisiert werden. Insbesondere kann bei diesen Aktualisierungen auch der Gültigkeitszeitraum der Berechtigungstoken BT aktualisiert werden.

Das Anwendungsprogramm 21 ist somit gemäss Ausführungsformen auf einen bestimmten Nutzer registriert.

In einem Schritt 450 sendet das Anwendungsprogramm 21 eine Initialisierungsanfrage an den Server 30.In einem Schritt 460 aktualisiert der Server 30 die jeweiligen Berechtigungstoken BT des jeweiligen Nutzers und sendet diese in einem Schritt 470 an das Anwendungsprogramm 21. In einem Schritt 480 speichert das Anwendungsprogramm 21 die aktualisierten Berechtigungstoken in dem Speicher 22 des Smartphones 20 ab.

Verbindet sich das Anwendungsprogramm 21 über einen längeren Zeitraum nicht mit dem Server 30, um zum Beispiel dem Entzug von Berechtigungen aus dem Weg zu gehen, werden diese durch den Ablauf des Gültigkeitszeitraums mit der Zeit ungültig. Außerdem muss spätestens zum Bezug von Software-Token eine Verbindung zum Server 30 und somit eine Aktualisierung der Berechtigungen erfolgen.

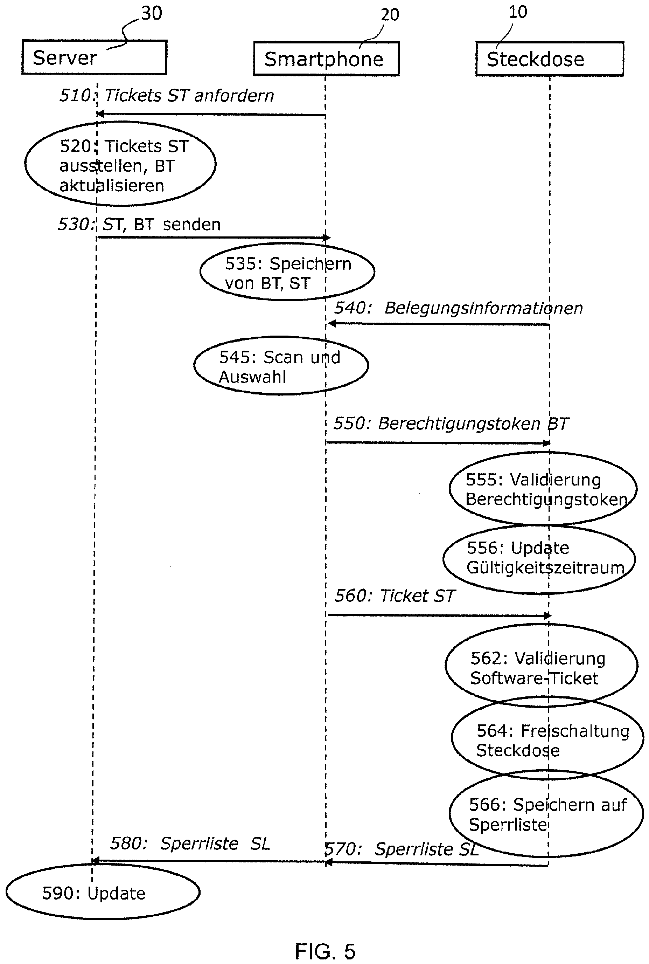

FIG. 5 zeigt ein Flussablaufdiagramm eines Ticketbezugs bzw. Ticketkaufs sowie das Einlösen eines solchen Software-Tickets zum Strombezug.

In einem Schritt 510 sendet das Anwendungsprogramm 21 des Smartphones 20 eine Anforderung an den Server 30, um eine bestimmte Anzahl von Software-Tickets ST auszustellen. Diese Anforderung kann beispielsweise auch nähere Informationen über die gewünschte Zeiteinheit ST der Software-Tickets enthalten.

In einem Schritt 520 überprüft der Server 30 die generelle Berechtigung des Nutzers, Software-Tickets zu erhalten. Eine solche Überprüfung umfasst insbesondere eine Überprüfung, ob der Nutzer bereits registriert ist und ob diese Registrierung noch gültig ist.

Ist dies der Fall, stellt der Server 30 die gewünschte Anzahl von Software-Tickets ST aus, aktualisiert die Berechtigungstoken BT des Nutzers, signiert die Software-Tickets ST und die aktualisierten Berechtigungstoken BT und schickt die signierten Software-Tickets ST und die signierten Berechtigungstoken BT in einem Schritt 530 an das Smartphone 20. In einem Schritt 535 speichert das Smartphone 20 die empfangenen Software-Tickets ST und die Berechtigungstoken BT in dem Speicher 22.

Damit kann der Nutzer U die ihm zugeordneten Steckdosen 10 bei Bedarf nutzen, und zwar völlig unabhängig davon, ob er eine Kommunikationsverbindung zu dem Server 30 hat oder nicht.

Die Steckdose 10 sendet in regelmässigen Abständen in einem Schritt 540 Belegungsinformationen aus. Diese Belegungsinformationen werden vorzugsweise als Broadcast-Message versendet und können beispielsweise als Advertisement Daten gemäss dem Bluetooth Standard, insbesondere gemäss dem Bluetooth Low Energy (BLE) Standard, ausgebildet sein.

Diese Belegungsinformationen können beispielsweise anzeigen, ob die jeweilige Steckdose 10 frei oder besetzt ist und auch eine Restlaufzeit beinhalten, d.h. angeben, bis wann die Steckdose besetzt ist.

Möchte der Nutzer U nun eine Steckdose 10 in seinem Umfeld benutzen, so öffnet und startet er das Anwendungsprogramm 21. Das Anwendungsprogramm 21 führt dann in einem Schritt 545 einen Scan, z.B. einen Bluetooth Scan, durch und überprüft, ob es in seinem Umfeld geeignete Steckdosen 10 gibt. Gemäss Ausführungsformen kann in dem Anwendungsprogramm 21 konfiguriert werden, welche Steckdosen im Anwendungsprogramm angezeigt werden. Gemäss einer Ausführungsform zeigt das Anwendungsprogramm 21 nur Steckdosen an, für die der Nutzer eine Berechtigung hat. Gemäss anderen Ausführungsformen zeigt das Anwendungsprogramm 21 alle Steckdosen im Umfeld an. Dies würde dem Nutzer erlauben, fehlende Berechtigungen anzufordern.

Der Nutzer U kann dann in dem Schritt 545 entscheiden, ob er eine der angezeigten Steckdosen nutzen möchte und eine entsprechende Auswahl treffen.

Damit eine Steckdose 10 Software-Tickets ST annehmen kann, muss sich das Anwendungsprogramm 21 zunächst mit Berechtigungstoken BT authentifizieren. Dies wird nachfolgend näher erläutert.

Hierzu ist es in einem ersten Validierungsschritt notwendig, sich mittels der jeweiligen Berechtigungstoken BT gegenüber den jeweiligen Steckdosen 10 zu authentifizieren. Dazu sendet das Anwendungsprogramm 21 in einem Schritt 550 den zu der ausgewählten Steckdose 10 passenden Berechtigungstoken BT an die jeweilige Steckdose 10 bzw. den Schalter 11. In einem ersten Validierungsschritt 555 überprüft die Steckdose 10 dann die Signatur des Berechtigungstokens BT, die Gültigkeit des Gültigkeitszeitraumes und ob die Vorrichtungskennung VK übereinstimmt. Ferner führt die Steckdose 10 in einem Schritt 556 einen Vergleich bzw. Abgleich der relativen Zeitbasis der Steckdose 10 bzw. des Schalters 11 mit dem Gültigkeitszeitraum des empfangenen Berechtigungstokens BT durch. Ist die aktuelle relative Zeitbasis der Steckdose 10 älter als der Gültigkeitszeitraum des empfangenen Berechtigungstokens BT, wird die relative Zeitbasis der Steckdose 10 bzw. des Schalters 11 aktualisiert und auf den neueren Wert gesetzt.

Somit wird der Gültigkeitszeitraum durch verschiedene Nutzer bei jeder Authentifizierung über die Berechtigungstoken BT an die jeweilige Steckdose 10 übertragen, wodurch der aktuelle Gültigkeitszeitraum in der Steckdose gesetzt wird.

Hat der Schalter 11 beispielsweise als Zeitbasis den Gültigkeitszeitraum Mai 2017 und erhält er dann einen Berechtigungstoken mit dem Gültigkeitszeitraum Juni 2017, so stellt er seine interne relative Zeitbasis um einen Monat weiter und somit auf Juni 2017 um. Je nach gewünschtem Sicherheitslevel könnte der Schalter 11 zusätzlich einen internen Timer mit einem Übergangszeitraum starten, während dem er noch Berechtigungstoken und Software-Tickets vom Mai 2017 akzeptiert. Dies würde dann gewährleisten, dass Nutzer, die sich für eine vordefinierte Zeit nicht mit dem Server 30 verbinden bzw. verbinden können, trotzdem noch ihre nicht aktualisierten Berechtigungstoken und Software- Tickets benutzen können.

Je höher der Sicherheitslevel, desto kürzer sollte dieser Übergangszeitraum gewählt werden.

Gemäss bevorzugten Ausgestaltungen der Erfindung könnte der Übergangszeitraum für die Software-Tickets länger sein als der Übergangszeitraum für die Berechtigungstoken. Wie oben beschrieben werden die Berechtigungstoken vorzugsweise bei jedem Start des Anwendungsprogramms und bei jeder Server-Kommunikation aktualisiert, was für ausgestellte Software-Token nicht vorgesehen ist. Damit könnte gemäss einer Ausführungsform ein System vorgesehen werden, welches vor Einlösung eines Software-Tickets immer einen aktuell gültigen Berechtigungstoken verlangt, während Software-Tickets mit abgelaufenem Gültigkeitszeitraum noch eine Übergangsfrist zur Einlösung zugestanden wird. Gemäss Ausgestaltungen beträgt der Übergangszeitraum z.B. einige Tage oder auch einige Wochen.

Danach könnten dann nur noch Berechtigungstoken und Software-Tickets mit einem Gültigkeitszeitraum Juni 2017 akzeptiert werden und der Nutzer müsste seine abgelaufenen Tickets erneuern.

Gemäss anderen Ausgestaltungen könnte der Gültigkeitszeitraum für Software Tickets auch generell länger gewählt werden als der Gültigkeitszeitraum für Berechtigungstoken. So könnten Berechtigungstoken beispielsweise immer nur einen Monat gültig sein, während Software-Tickets einen Gültigkeitszeitraum von drei Monaten haben könnten.

In einem weiteren Schritt 560 sendet der Nutzer U dann ein oder mehrere Software-Tickets ST entsprechend der gewünschten Nutzungsdauer an die ausgewählte Steckdose 10. Nach dem Senden der Software-Tickets ST löscht das Anwendungsprogramm 21 automatisch das Software-Ticket ST, damit es nicht nochmal benutzt werden kann. Diese automatische Löschfunktion ist vorzugsweise so implementiert, dass sie automatisch im Hintergrund verläuft und vom Nutzer nicht abgeschaltet werden kann.

In einem zweiten Validierungsschritt 562 validiert die Steckdose 10 den oder die Software-Tickets ST und schaltet bei positiver Validierung die Steckdose 10 in einem Schritt 564 für einen den Zeiteinheiten des Software-Tickets entsprechenden Zeitraum frei. Die Validierung des Software-Tickets ST umfasst die Überprüfung der Signatur, die Überprüfung des Gültigkeitszeitraumes und die Überprüfung der Nutzerkennung. Bei der Nutzerkennung wird insbesondere überprüft, ob diese mit der Nutzerkennung der Berechtigungskennung übereinstimmt und ob der Nutzer somit generell berechtigt ist, die jeweilige Steckdose 10 zu benutzen. Ausserdem überprüft der Schalter 11, ob die Ticket-Kennung auf der in dem Speicher 17 gespeicherten Sperrliste SL ist.

In einem Schritt 566 fügt die Steckdose 10 dann das eingelöste Software-Ticket ST der Sperrliste SL hinzu und speichert diese im Speicher 17. In einem Schritt 570 wird die aktualisierte Sperrliste SL dann an das Anwendungsprogramm 21 gesendet, welches diese in einem Schritt 580 an den Server 30 weiterleitet. In einem Schritt 590 aktualisiert der Server 30 dann seine gespeicherten Sperrliste(n).

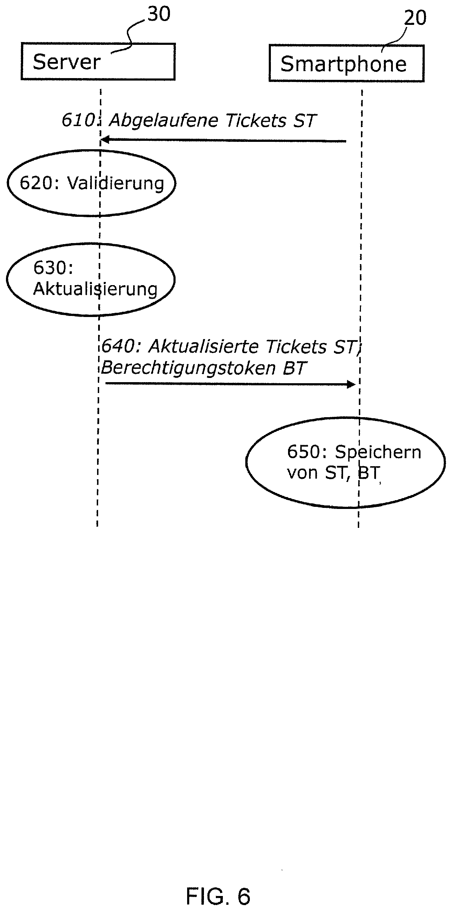

Figur 6 zeigt ein Flussablaufdiagramm eines Erneuerungsmechanismus, mittels dem abgelaufene Software-Tickets erneuert werden können.

In einem Schritt 610 sendet das Anwendungsprogramm 21 des elektronischen Kommunikationsgerätes 20 ein oder mehrere abgelaufene Software-Tickets ST zu dem Server 30. In einem Schritt 620 validiert der Server 30 die empfangenen Tickets ST und überprüft, ob die Software-Tickets ST wirklich abgelaufen sind und noch nicht benutzt wurden. Ferner wird überprüft, ob die Signatur korrekt ist, und ob der Nutzer überhaupt die Berechtigung für die gesendeten Software-Tickets ST besitzt.

Ist die Validierung positiv, stellt der Server 30 in einem Schritt 630 neue, aktualisierte Software-Tickets für die abgelaufenen Tickets ST aus. Diese bekommen dieselbe Ticket-Kennung TK wie die abgelaufenen Software-Tickets ST. In einem Schritt 640 werden die erneuerten Software-Tickets ST an das Anwendungsprogramm 21 geschickt, welches diese in einem Schritt 650 abspeichert. Damit kann das Anwendungsprogramm 21 die erneuerten Software-Tickets ST wieder benutzen.

Gemäss Ausführungsformen kann auch eine Änderung des verwendeten Public Keys PK über die Weitergabe eines mit dem alten Public Key PK signierten neuen Public Key vom Server 30 über die Anwendungsprogramme 21 an alle Steckdosen 10 bzw. Schalter 11 vorgenommen werden. Haben die Steckdosen 10 zusätzlich einen Master-Key gespeichert, müssen die Steckdosen 10 zusätzlich überprüfen, ob der neue Public-Key vom Master-Key abgeleitet wurde.

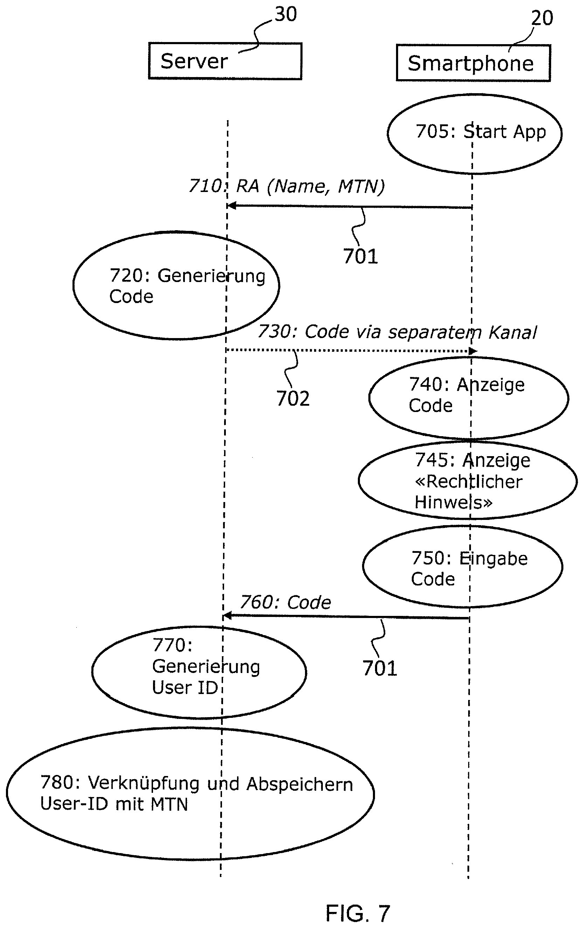

FIG. 7 zeigt ein Flussablaufdiagramm eines Registrierungsverfahrens 700 gemäss Ausführungsformen der Erfindung.

Das Flussablaufdiagramm 700 illustriert die Schritte zwischen dem Server 30 und dem Kommunikationsgerät 20 gemäss FIG. 1. Auf dem Kommunikationsgerät 20 ist wie oben beschrieben das Anwendungsprogramm 21 installiert.

Das Kommunikationsgerät 20 ist als Smartphone 20 ausgebildet und die elektrische Vorrichtung 10 als Steckdose 10. Ausserdem wird davon ausgegangen, dass Steckdose 10 und Schalter 11 integriert ausgebildet sind und eine einheitliche Vorrichtungskennung VK aufweisen.

In einem Schritt 705 startet der Benutzer das Anwendungsprogramm 21 auf seinem Smartphone 20. Bei einer erstmaligen Benutzung des Anwendungsprogramms 21 muss er sich dann zunächst als Nutzer registrieren.

In einem Schritt 710 sendet das Smartphone 20 eine Registrierungsanfrage RA an den Server 30. Die Registrierungsanfrage RA kann beispielsweise ein Antrag sein, sich für die Benutzung von einer Gruppe von elektrischen Steckdosen 10 zu registrieren. Für die Registrierung stellt das Anwendungsprogramm einen ersten sicheren Kommunikationskanal 701, insbesondere eine Internetverbindung, beispielswiese eine SSL/TLS Verbindung, mit dem Server 30 her. Der erste Kommunikationskanal 701 ist mittels Pfeilen mit durchgehender Linie dargestellt.

Gemäss einer bevorzugten Ausführungsform wird die Registrierungsanfrage in eine von dem Server 30 bereitgestellte Eingabemaske einer verschlüsselten Webseite eingegeben. Die Webseite ist vorzugsweise gemäss dem Hypertext Transfer Protocol Secure (HTTPS)- Kommunikationsprotokoll verschlüsselt, um die von dem Nutzer eingegebenen Daten abhörsicher an den Server 30 zu übertragen.

Gemäss der in der FIG. 7 dargestellten Ausführungsform der Erfindung muss der Nutzer zwingend mindestens eine Telefonnummer eines Mobilfunknetzes angeben, welche im Folgenden als Mobilfunktelefonnummer MTN bezeichnet wird. Eine derartige Mobilfunktelefonnummer ist immer mit einer internationalen Mobilfunkteilnehmerkennung (International Mobile Subscriber Identity), nachfolgend IMSI genannt verknüpft. Eine derartige IMSI dient in Mobilfunknetzen, z.B. in GSM-, UMTS- und LTE-Mobilfunknetzen, als interne Teilnehmerkennung der eindeutigen Identifizierung der Netzteilnehmer. Die IMSI wird auf einer speziellen Chipkarte gespeichert, dem Subscriber Identity Module (SIM). Die IMSI-Nummer wird weltweit nur einmalig pro SIM von den Mobilfunknetzbetreibern vergeben. Zudem bestehen in einer Vielzahl von Ländern, beispielsweise Deutschland und der Schweiz, gesetzliche Vorgaben, gemäss denen man sich bei Erwerb einer neuen SIM-Karte ausweisen muss und somit bei Erwerb einer SIM-Karte seine Identität nachweisen muss.

Dies machen sich Ausführungsformen der Erfindung in effizienter Weise zu Nutze, indem Sie zukünftige Nutzer des Systems mittels einer Mobilfunktelefonnummer eindeutig identifizieren.

Nach Empfang einer Registrierungsanfrage RA mit Angabe einer Mobilfunktelefonnummer MTN generiert der Server einen Code C, welcher als Identifikationscode fungiert, und sendet diesen in einem Schritt 730 über einen separaten, zweiten Kommunikationskanal 702 an das Smartphone 20. Der separate zweite Kommunikationskanal 702 ist vorzugsweise eine Mobilfunkverbindung, insbesondere eine Kurzmitteilung (SMS) mittels des Short Message Service (SMS). Der zweite Kommunikationskanal 702 ist mittels eines Pfeils mit gepunkteter Linie dargestellt.

Gemäss Ausführungsformen der Erfindung ist der Code C ein einmaliger Code oder ein einmaliges Passwort, welches zur einmaligen Authentifizierung des Nutzers gegenüber dem Server 30 verwendet wird. Der Code C kann beispielsweise mit einem Zufallsgenerator erzeugt werden.

In einem Schritt 740 wird der Code dem Nutzer auf einem Display des Smartphones 20 angezeigt. Zusätzlich kann dem Nutzer in der Eingabemaske der Webseite in einem Schritt 745 ein rechtlicher Hinweis angezeigt werden, in dem der Benutzer auf die allenfalls kostenpflichtige Verwendung des Anwendungsprogramms bzw. der durch das Anwendungsprogramm bezogenen Software-Tickets hingewiesen wird. Ein derartiger Hinweis könnte beispielsweise wie folgt lauten: "Der Nutzer des Anwendungsprogramms wird durch die Telefonnummer seines Smartphones eindeutig identifiziert und der Nutzer erkennt an, dass die Nutzung des Anwendungsprogramms allenfalls kostenpflichtige Leistungen beinhaltet".

Zusätzlich kann gemäss Ausführungsformen der Erfindung die Eingabemaske einen Bestätigungsknopf umfassen, mittels dem der Nutzer bestätigen muss, dass er den rechtlichen Hinweis zur Kenntnis genommen hat und damit einverstanden ist.

Ist der Nutzer einverstanden, gibt er in einem Schritt 750 den Code in die Eingabemaske des Smartphones 20 mittels einer Eingabevorrichtung, insbesondere mittels eines berührungsempfindlichen Bildschirms ( Touch-Screens) ein, und sendet diesen in einem Schritt 760 über den ersten Kommunikationskanal 701 an den Server 30. Der Server 30 generiert nun in einem Schritt 770 eine Nutzerkennung (User-ID) und verknüpft in einem Schritt 780 diese User-ID mit der Mobilfunktelefonnummer MTN des Nutzers.

Damit ist der Nutzer des Anwendungsprogrammes 20 und seine Nutzerkennung (User-ID) mittels der Mobilfunktelefonnummer seines Smartphones und der dazu korrespondierenden IMSI-Nummer eindeutig gegenüber dem Server 30 identifiziert.

Zudem wird gemäß Ausführungsformen der Erfindung jedes einzelne Software Ticket und jeder Berechtigungstoken mit der Nutzerkennung (User-ID) verknüpft. Da diese User-ID mit den Registrierungsdaten (Mobilfunktelefonnummer, Name) auf dem Server verknüpft ist, ist auch jedes einzelne Software Ticket und jeder einzelne Berechtigungstoken eindeutig gegenüber dem Server 30 identifiziert.

Daher erleichtern Ausführungsformen der Erfindung eine rechtsgültige Abrechnung der Benutzung der Software-Tickets.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. System aufweisend
eine elektrische Vorrichtung (10), insbesondere eine elektrische Steckdose;
einen drahtlos steuerbaren Schalter (11), welcher in einem offenen Zustand die elektrische Vorrichtung (10) von einem elektrischen Netz (12) trennt und in einem geschlossenen Zustand die elektrische Vorrichtung (10) mit dem elektrischen Netz (12) verbindet;
ein elektronisches Kommunikationsgerät (20), insbesondere ein Smartphone (20);
ein auf dem elektronischen Kommunikationsgerät (20) installiertes Anwendungsprogramm 21); und
einen zentralen Server (30);
wobei der Server (30) dazu vorgesehen ist, Software-Tickets und Berechtigungstoken für einen Strombezug der elektrischen Vorrichtung (10) für das Anwendungsprogramm (21) auszustellen;
wobei die Software-Tickets zumindest aufweisen:
eine Server-Signatur;
einen Gültigkeitszeitraum;
eine relative Zeiteinheit; und
eine Nutzerkennung; und
wobei die Berechtigungstoken wenigstens aufweisen:
eine Vorrichtungskennung;
eine Nutzerkennung; und
einen Gültigkeitszeitraum;
wobei der Schalter (11) einen Speicher (17) zur Speicherung eines öffentlichen Schlüssels des Servers (30) aufweist;
wobei der Schalter (11) dazu vorgesehen ist,
eine drahtlose Kommunikationsverbindung mit dem Anwendungsprogramm (21) des elektronischen Geräts (20) aufzubauen;
ein oder mehrere Software-Tickets und einen Berechtigungstoken von dem Anwendungsprogramm (21) zu empfangen;
einen zweistufigen Validierungsprozess aufweisend einen ersten Validierungsschritt und einen zweiten Validierungsschritt durchzuführen, wobei in dem ersten Validierungsschritt der Berechtigungstoken validiert wird und in einem zweiten Validierungsschritt ein oder mehrere Software-Tickets validiert werden;
in dem zweiten Validierungsschritt
die Server-Signatur und den Gültigkeitszeitraum des Software-Tickets zu validieren;
den Schalter (11) nach positiver Validierung der Server-Signatur und des Gültigkeitszeitraums für eine durch die relative Zeiteinheit des Software-Tickets definierte Zeitperiode zu schliessen und die elektrische Vorrichtung (10) zum Strombezug freizuschalten.

2. System nach Anspruch 1, **dadurch gekennzeichnet, dass** das elektronische Kommunikationsgerät ein Mobiltelefon, insbesondere ein Smartphone, ist und dass die Nutzerkennung mit der Mobiltelefonnummer des Mobiltelefons verknüpft ist.

3. System nach Anspruch 2, **dadurch gekennzeichnet, dass** das System dazu eingerichtet ist, ein Registrierungsverfahren zur Registration eines neuen Nutzers durchzuführen, wobei das Registrierungsverfahren folgende Schritte umfasst:
Senden einer Registrierungsanfrage von dem Anwendungsprogramm des Mobiltelefons über einen ersten Kommunikationskanal an den zentralen Server, wobei die Registrierungsanfrage eine Mobilfunktelefonnummer enthält;
Erzeugen eines Codes zur Nutzerauthentifizierung durch den Server;
Senden des Codes von dem Server über einen zweiten Kommunikationskanal, der separat zu dem ersten Kommunikationskanal ausgebildet ist, an das Anwendungsprogramm des Mobiltelefons;
Anzeige des Codes durch das Anwendungsprogramm auf einem Display des Mobiltelefons;
Empfangen des Codes von dem Anwendungsprogramm durch Eingabe des Nutzers mittels einer Eingabevorrichtung des Mobiltelefons;
Senden des Codes zur Authentifizierung des Nutzers von dem Mobiltelefon über den ersten Kommunikationskanal an den Server; und
Registrierung des Nutzers mit einer Nutzerkennung, die mit der Mobiltelefonnummer verknüpft ist.

4. System nach Anspruch 3, **dadurch gekennzeichnet, dass** der erste Kommunikationskanal eine Internetverbindung ist, insbesondere eine durch SSL/TLS gesicherte Verbindung, ist und dass der zweite Kommunikationskanal eine Mobilfunkverbindung, insbesondere ein Short Message Service (SMS), ist.

5. System nach einem der vorhergehenden Ansprüche, **dadurch gekennzeichnet, dass** die relativen Zeiteinheiten der Software-Tickets miteinander zu einer Gesamtbezugsdauer des Strombezugs kombinierbar sind.

6. System nach einem der vorhergehenden Ansprüche, **dadurch gekennzeichnet, dass** der Schalter dazu vorgesehen ist,
mehrere Software-Tickets von dem Anwendungsprogramm zu empfangen;
die relativen Zeiteinheiten der empfangenen Software-Tickets zu einer Gesamtbezugsdauer des Strombezugs zu addieren;
den Schalter (11) nach positiver Validierung der Server-Signatur und des Gültigkeitszeitraums für eine durch die Gesamtbezugsdauer der Software-Tickets definierte Zeitperiode zu schliessen und die elektrische Vorrichtung (10) zum Strombezug freizuschalten.

7. System nach einem der vorhergehenden Ansprüche, **dadurch gekennzeichnet, dass** der Schalter (11) dazu vorgesehen ist, von dem Gültigkeitszeitraum des Berechtigungstokens eine relative Zeitbasis für den Schalter (11) abzuleiten.

8. System nach einem der vorhergehenden Ansprüche, **dadurch gekennzeichnet,**
**dass** die Software-Tickets jeweils eine individuelle Ticket-Kennung aufweisen.

9. System nach Anspruch 8, **dadurch gekennzeichnet,**
**dass** der Schalter (11) dazu konfiguriert ist, eine Sperrliste mit Ticket-Kennungen von bereits benutzten Software-Tickets zu speichern;
vor Freischaltung der elektrischen Vorrichtung (10) die jeweilige Ticket-Kennung mit der Sperrliste zu vergleichen;
bei einem negativen Vergleichsergebnis die elektrische Vorrichtung (10) freizuschalten; und
bei einem positiven Vergleichsergebnis eine Freischaltung zu verweigern.

10. System nach Anspruch 9, **dadurch gekennzeichnet, dass** zwei oder mehr elektrische Vorrichtungen (10), die sich in Funkreichweite zueinander befinden, dazu konfiguriert sind, die jeweils gespeicherten Sperrlisten miteinander auszutauschen.

11. System nach einem der Ansprüche 9 oder 10, **dadurch gekennzeichnet, dass**
der Schalter (11) dazu konfiguriert ist, die jeweils gespeicherte Sperrleiste an das mit ihm in kommunikativer Verbindung stehende Anwendungsprogramm (21) zu senden; und
das Anwendungsprogramm (21) dazu konfiguriert ist, die von dem Schalter (11) empfangene Sperrliste an den Server (30) weiterzuleiten.

12. System nach einem der Ansprüche 8 bis 11, **dadurch gekennzeichnet, dass** der Server (30) zur Durchführung eines Erneuerungsmechanismus zur Erneuerung abgelaufener Software-Tickets konfiguriert ist, wobei der Server (30) dazu konfiguriert ist, im Erneuerungsmechanismus
ein abgelaufenes Software-Ticket von dem Anwendungsprogramm (21) zu empfangen; und
ein neues Software-Ticket für das abgelaufene Software-Ticket mit einem neuen Gültigkeitszeitraum auszustellen, wobei das neue Software-Ticket dieselbe Ticket-Kennung wie das abgelaufene Software-Ticket hat.

13. Verfahren zum Bedienen eines Schalters (11) mittels eines Anwendungsprogramms (21) eines elektronischen Kommunikationsgerätes (20), wobei der Schalter (11) zum Freischalten einer elektrischen Vorrichtung (10) an ein elektrisches Netz (12) vorgesehen ist, wobei das Verfahren die Schritte aufweist:
Senden einer Anforderung zum Ausstellen von Software-Tickets und Berechtigungstoken von dem Anwendungsprogramm (21) des elektronischen Kommunikationsgerätes (20) an einen zentralen Server (30);
Ausstellen von Software-Tickets von dem Server (30) für die Freischaltung der elektrischen Vorrichtung (10) zum Strombezug;
wobei die Software-Tickets zumindest aufweisen:
eine Server-Signatur;
einen Gültigkeitszeitraum;
eine relative Zeiteinheit; und
eine Nutzerkennung;
Ausstellen von Berechtigungs-Token von dem Server (30);
wobei die Berechtigungs-Token zumindest aufweisen:
eine Vorrichtungskennung;
eine Nutzerkennung; und
einen Gültigkeitszeitraum;
Aufbauen einer drahtlosen Kommunikationsverbindung zwischen dem Anwendungsprogramm (21) und dem Schalter (10);
Senden von ein oder mehreren Software-Tickets und einem Berechtigungstoken an den Schalter (11);
Empfangen der ein oder mehreren Software-Tickets und des Berechtigungstokens durch den Schalter (11) ;
Validieren des Berechtigungstokens in einem ersten Validierungsschritt;
Überprüfen der Server-Signatur des Software-Tickets und des Gültigkeitszeitraums in einem zweiten Validierungsschritt;
Schliessen des Schalters (11) zum Strombezug nach positiver Validierung des Berechtigungstokens und positiver Überprüfung der Server-Signatur und des Gültigkeitszeitraums des Software-Tickets für eine durch die relative Zeiteinheit des Software-Tickets oder eine durch die relativen Zeiteinheiten der Software-Tickets definierte Zeitperiode.

14. Elektrische Vorrichtung, insbesondere eine elektrische Steckdose, aufweisend:
einen drahtlos steuerbaren Schalter (11), welcher in einem offenen Zustand die elektrische Vorrichtung (10) von einem elektrischen Netz (12) trennt und in einem geschlossenen Zustand die elektrische Vorrichtung (10) mit dem elektrischen Netz (12) verbindet;
wobei der Schalter (11) einen Speicher (17) zur Speicherung eines öffentlichen Schlüssels des Servers (30) aufweist;
wobei der Schalter (11) dazu vorgesehen ist, eine drahtlose Kommunikationsverbindung mit einem Anwendungsprogramm (21) eines elektronischen Kommunikationsgeräts aufzubauen;
ein oder mehrere Software-Tickets und einen Berechtigungstoken von dem Anwendungsprogramm (21) zu empfangen;
wobei die Software-Tickets zumindest aufweisen:
eine Server-Signatur;
einen Gültigkeitszeitraum;
eine Zeiteinheit; und
eine Nutzerkennung;
wobei die Berechtigungstoken wenigstens aufweisen:
eine Vorrichtungskennung;
eine Nutzerkennung; und
einen Gültigkeitszeitraum;
wobei die Berechtigungstoken eine generelle Berechtigung des der Nutzerkennung zugeordneten Nutzers sind, eine elektrische Vorrichtung gemäss der Vorrichtungskennung zu nutzen;
nach Empfang eines Berechtigungstokens in einem ersten Validierungsschritt den Berechtigungstoken zu validieren;
nach Empfang eines Software-Tickets in einem zweiten Validierungsschritt die Server-Signatur des Software-Tickets und den Gültigkeitszeitraum zu überprüfen;
den Schalter (11) nach positiver Überprüfung des Berechtigungstokens sowie der Server-Signatur und des Gültigkeitszeitraums des Software-Tickets für eine durch die Zeiteinheit des Software-Tickets definierte Zeitperiode zu schliessen und die elektrische Vorrichtung (10) zum Strombezug freizuschalten.

15. Anwendungsprogramm für ein elektronisches Kommunikationsgerät, insbesondere ein Smartphone,
wobei das Anwendungsprogramm (21) dazu konfiguriert ist,
Software-Tickets und Berechtigungstoken für die Freischaltung einer elektrischen Vorrichtung (10), insbesondere einer elektrischen Steckdose, zum Strombezug von einem zentralen Server (30) zu empfangen, wobei die Software-Tickets zumindest aufweisen:
eine Server-Signatur;
einen Gültigkeitszeitraum;
eine Zeiteinheit; und
eine Nutzerkennung; und
wobei die Berechtigungstoken wenigstens aufweisen
eine Vorrichtungskennung;
eine Nutzerkennung; und
einen Gültigkeitszeitraum;
wobei das Anwendungsprogramm (21) ferner dazu konfiguriert ist, einen Berechtigungstoken und ein oder mehrere Software-Tickets an einen drahtlos steuerbaren Schalter (11) zu senden, welcher in einem offenen Zustand die elektrische Vorrichtung (10) von einem elektrischen Netz (12) trennt und in einem geschlossenen Zustand die elektrische Vorrichtung (10) mit dem elektrischen Netz (12) verbindet.
